# EUROPEAN PATENT SPECIFICATION

(11) **EP 3 189 219 B1**
(45) Date of publication and mention of the grant of the patent: **07.08.2019**
(21) Application number: 15837240.9
(22) Date of filing: 26.08.2015
(51) Int. Cl.: F01N 3/20, F01N 3/36, F02M 61/18, F01N 3/28

(54) **ARRANGEMENT TO INTRODUCE A REDUCING AGENT INTO AN EXHAUST STREAM**
ANORDNUNG ZUM EINBRINGEN EINES REDUKTIONSMITTELS IN EINEM ABGASSTROM
AGENCEMENT POUR INTRODUIRE UN AGENT RÉDUCTEUR DANS UN COURANT D'ÉCHAPPEMENT

(30) Priority: 03.09.2014 SE 1451025
(43) Date of publication of application: 12.07.2017
(73) Proprietor: Scania CV AB, 151 87 Södertälje (SE)
(72) Inventor: JOHANSSON, Lars, S-117 56 Stockholm (SE); YITBAREK, Zemichael, S-152 71 Södertälje (SE)
(74) Representative: Scania CV AB
(86) International application number: PCT/SE2015/050901
(87) International publication number: WO 2016/036298

(56) References cited:
- EP-A1- 2 325 452
- EP-A2- 2 687 286
- WO-A1-2011/106487
- WO-A1-2011/163395
- WO-A1-2012/044233
- WO-A1-2012/047159
- WO-A2-2011/056676
- DE-A1-102005 011 657
- DE-A1-102010 041 094
- DE-A1-102010 064 275
- US-A1- 2010 005 790

## Description

### BACKGROUND OF THE INVENTION AND PRIOR ART

The invention relates to an arrangement to inject a reducing agent into exhausts in accordance with the preamble of claim 1.

In order to reduce the emission of nitrogen oxides from diesel engines, a technology called SCR (Selective Catalytic Reduction) is used. This method entails that a specified dose of a reducing agent in the form of a solution of urea is added to the exhausts in the exhaust conduit of a diesel engine. The urea solution may be injected into the exhaust conduit in such a manner that it is vaporized as it comes into contact with the hot exhausts, and ammonia is formed. The mixture of ammonia and exhausts is then led through a catalyst where a chemical reaction occurs. Here the nitrogen content of the nitrogen oxides in the exhausts reacts with the nitrogen in the ammonia, forming nitrogen gas. The oxygen in the nitrogen oxides reacts with the hydrogen in the ammonia, forming water. The nitrogen oxides in the exhausts are thus reduced to nitrogen gas and water steam in the catalyst. With the correct dosage of urea, the diesel engine's emission of nitrogen oxides may be reduced to a great extent.

A urea solution may be supplied with the help of an injection element, injecting the urea solution in atomised form into an exhaust conduit. However, it is difficult to avoid that a part of the added urea solution comes into contact with and sticks on the exhaust conduit's internal wall surface in a non-evaporated state. The exhaust conduit, which is frequently in contact with the ambient air, has a lower temperature than the exhausts inside the exhaust conduit. Accordingly, a film of urea solution may form in the exhaust conduit, which film is dragged along by the exhaust stream. After a certain distance the water in the urea solution boils away. There remains solid urea, which is slowly evaporated by the heat. If the layer of urea is sufficiently thick, the urea and its decomposition products will react with each other. The result is primitive polymers on a urea base, so-called urea lumps. Such urea lumps may, over time, block an exhaust conduit.

EP2325452 A1 shows an arrangement to inject a reducing agent into exhausts.

EP2687286 A2 shows a mixing device for the after treatment of exhaust gases in an exhaust system.

DE102010041094 A1 shows an exhaust gas purification system for motor vehicles with an internal combustion engine, in particular with a diesel engine.

SE 535 198 shows an exhaust conduit comprising a housing in the form of a truncated cone, with an internal space where urea solution is injected into the exhausts. Accordingly, there is no risk that evaporated urea solution may, at least initially, hit an internal wall surface in the exhaust conduit. The housing comprises peripheral inlet openings where exhausts flow into the internal space. The exhausts flowing in force the added urea solution towards the middle of the internal space. This prevents non-evaporated urea solution from hitting the internal wall surface of the housing. However, it is not possible to entirely prevent minor accumulations of urea solution from arising on the internal wall surface of the housing. Such minor accumulations of urea solution may be dragged along by the primary exhaust stream in the housing, in the direction towards a front edge surface of the housing, where non-evaporated urea solution may accumulate in a relatively ample amount. Here, there is a risk that urea lumps may form.

### SUMMARY OF THE INVENTION

The objective of the present invention is to provide an arrangement supplying a reducing agent to the exhausts, whereby the risk of lumps forming is substantially reduced.

This objective is achieved with the arrangement of the type specified at the beginning, which is characterised by the features specified in the characterising portion of claim 1. The pipe-shaped body thus comprises at least one elongated inlet opening, which extends at least one revolution around the central axis of the injection space that is defined by the pipe-shaped body. The exhausts flowing into the injection space via such a radial inlet opening form a substantially circular barrier of in-flowing gases. Such a barrier of exhausts, extending at least one revolution around the injection space, in an efficient manner prevents non-evaporated reducing agent that has got stuck on a surface of the pipe-shaped body, which surface is located upstream of the inlet opening, from moving to a surface on the pipe-shaped body, which surface is located downstream of the inlet opening. The reducing agent may be a urea solution or another solution containing an ammonia salt. Advantageously, the pipe-shaped body is equipped with several such inlet openings or with one inlet opening extending several revolutions around the central axis with a pitch. This prevents, in an efficient manner, minor local accumulations of reducing agent from being moved along by the primary exhaust stream and accumulating in larger amounts on surfaces arranged downstream in the pipe-shaped body, and in particular on surfaces at the pipe-shaped body's outlet at the other end. The risk of large accumulations of reducing agent on the pipe-shaped body is thus substantially eliminated, as is the risk of lumps forming.

According to the invention, said inlet opening is defined by two elongated material sections arranged in parallel, which extend around the central longitudinal axis at a distance from each other. With the help of such elongated material sections, the inlet openings may be created in a simple manner.

According to the present invention, said elongated material sections are comprised in one cohesive unit in the form of a screw spring. A screw spring is a relatively simple component, with which it is possible to create a pipe-shaped body with an internal space according to the invention. A screw spring consists of an elongated element extending around a central longitudinal axis with a certain pitch. In this case, a cohesive inlet opening is obtained, which has a helical extension along the entire pipe-shaped body's length.

According to one alternative embodiment of the present invention, said elongated material sections are annular, and said elongated inlet opening between the elongated material sections is created with the help of distance elements. The distance elements may be of any type, as long as they have the capacity to connect the adjacent elongated material sections at a distance from each other. The distance elements should, however, have relatively small dimensions, so that non-evaporated reducing agent may not be led across between two adjacent elongated material sections via the distance elements.

According to one embodiment of the present invention, said pipe-shaped body defines an injection space, having a continuously increasing cross sectional area from a first end, where the reducing agent is injected into the injection space, to a second open end. The pipe-shaped body advantageously comprises inlet openings, which lead in exhausts at various distances from the pipe-shaped body's first end. Thus, the amount of exhausts will increase successively inside the injection space, from the pipe-shaped body's first end up to its second end. In order for the injection space to be able to receive exhausts in connection with the second end as well, it is suitable for the injection space to increase successively in a direction towards the second end. The pipe-shaped body may thus be shaped like a truncated cone.

According to one embodiment of the present invention, the injection space has a circular cross sectional area. Thus, the injection of the reducing agent may occur in a central position, where the distance is equal to all adjacent surfaces of the pipe-shaped body. Accordingly, this eliminates the risk, in most cases, of non-evaporated reducing agent accumulating in a specific area of the pipe-shaped body. The injection space may, however, have any substantially arbitrary cross sectional area. It may for example be oval or have a polygonal shape.

According to one embodiment of the present invention, said elongated material sections have a circular cross sectional shape. An elongated material section with a circular cross sectional shape has an external surface that lacks sharp edges where non-evaporated reducing agent may accumulate. Sharp edges should be avoided, also for the reason that they are areas, which are quickly cooled down during periods with low exhaust temperatures. Any potential non-evaporated reducing agent, which is stuck on an elongated material section with a circular cross section, forms a thin film that is distributed over a larger surface. Such a thin film usually evaporates relatively quickly. Said elongated material sections may alternatively have an oval cross sectional shape. In this case as well, there are no sharp edges where non-evaporated reducing agent may accumulate. According to an additional alternative, said elongated material sections may have a cross sectional shape in the form of a polygon with rounded corners. In particular the corners should be well rounded, if the elongated material section has a triangular or a square cross sectional shape, so that no reducing agent accumulates in the corners.

According to one embodiment of the present invention, the pipe shaped body is made of stainless steel. Stainless steel is a material, which tolerates the corrosive, and warm environment that the pipe shaped body is subjected to in contact with the exhausts. Stainless steel also has relatively good thermal conductivity, which favours the evaporation of non-evaporated reducing agent when it gets stuck on the pipe-shaped body. Alternatively, the pipe-shaped body may be made of copper or a suitable metal alloy.

According to one embodiment of the present invention, said elongated inlet opening has a width in the range of 0.5-5 mm. With such an inlet opening, in most cases an exhaust flow into the injection space is provided, which efficiently prevents non-evaporated reducing agent from passing through the inlet opening. It should be noted that the exhaust stream obtains a higher speed through a narrower inlet opening than through a wider inlet opening. Accordingly, it is not obvious that a wider inlet opening prevents passage of non-evaporated reducing agent between two elongated material sections in a more efficient manner than a narrower inlet opening.

According to the present invention, said elongated inlet openings have a varying width between the pipe shaped body's first end and second end. By varying the width, a desired in-flow of exhausts may be provided in different areas of the pipe-shaped body. Alternatively, said elongated inlet openings may have a constant width.

According to one embodiment of the present invention, said elongated material section has a diameter in the range of 2-8 mm. The elongated material section may consist of an elongated thread, provided with a suitable curvature around the central axis. With such a diameter, in most cases a pipe-shaped body, which reduces the formation of lumps efficiently, is provided.

According to one embodiment of the present invention, the arrangement is adapted as one cohesive unit, which may be fitted in one piece inside a container comprising an exhaust conduit. The arrangement may comprise a plate shaped element, which supports the pipe-shaped body and the injection element. The arrangement may be fitted inside an opening in the container. In a fitted state, the plate shaped element seals the opening in the container. The arrangement is advantageously fitted in a bent section of an exhaust conduit. The exhaust conduit may here comprise a bend of approximately 90°. This facilitates the flow of exhausts into the injection space of the pipe-shaped body via the inlet opening. It is sufficient to lead a part of the exhausts in an exhaust conduit into the injection space. Suitably, 5-50%, preferably 10-20% of the total exhaust flow is led into the injection space.

### BRIEF DESCRIPTION OF THE DRAWINGS

Below is a description, as an example, of preferred embodiments of the invention with reference to the enclosed drawings, on which:
- Fig, 1: shows an arrangement for injection of a urea solution into an exhaust conduit according to one embodiment of the present invention and
- Fig. 2: shows the arrangement in more detail,
- Fig. 3a-b: shows two alternative shapes of the pipe-shaped body in Fig. 2,
- Fig. 4a-c: shows three different alternative cross sections of the elongated elements that form the pipe-shaped body and
- Fig. 5: shows a pipe-shaped body according to one alternative embodiment.

### DETAILED DESCRIPTION OF A PREFERRED EMBODIMENT OF THE INVENTION

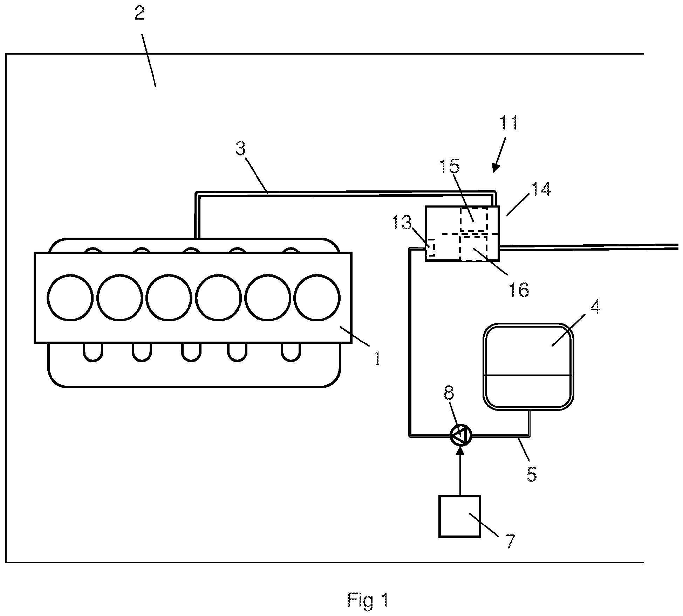

Fig. 1 shows a combustion engine in the form of a diesel engine 1. The diesel engine 1 may be intended as a driver motor for a schematically displayed heavy goods vehicle 2. The exhausts from the cylinders of the diesel engine 1 are led, via an exhaust manifold, to an exhaust conduit 3. The exhaust conduit 3 is equipped with catalytic exhaust purification according to the method called SCR (Selective Catalytic Reduction). This method entails that a reducing agent, which may be a urea solution, is supplied to the exhausts in the diesel engine's exhaust conduit 3. The urea solution is stored in a tank 4 and is led, via a conduit 5, to an arrangement 13, which is adapted to inject the urea solution into the exhausts from the combustion engine 1. A control device 7, which may be a computer unit, and which is equipped with suitable software, controls the supply of the urea solution that is led to the arrangement 13, via activation of a dosage element in the form of a pump 8. The arrangement 13 is comprised in an exhaust treatment system 11.

The arrangement 13 is arranged in a container 14 in the form of a silencer. The container 14 also contains a particulate filter 15 and an SCR-catalyst 16. The container 14 may also comprise other exhaust purifying components, such as an oxidation catalyst and an ammonia slip catalyst. The added urea solution is heated by the exhausts, so that it is vaporised and transformed into ammonia. When the evaporated urea solution reaches the SCR-catalyst 16, a chemical reaction takes place, at which the nitrogen in the nitrogen oxides in the exhausts react with the nitrogen in the ammonia, so that nitrogen is formed. The oxygen in the nitrogen oxides reacts with the hydrogen in the ammonia, forming water. The nitrogen oxides in the exhausts are thus reduced in the SCR-catalyst 16 to nitrogen gas and water steam.

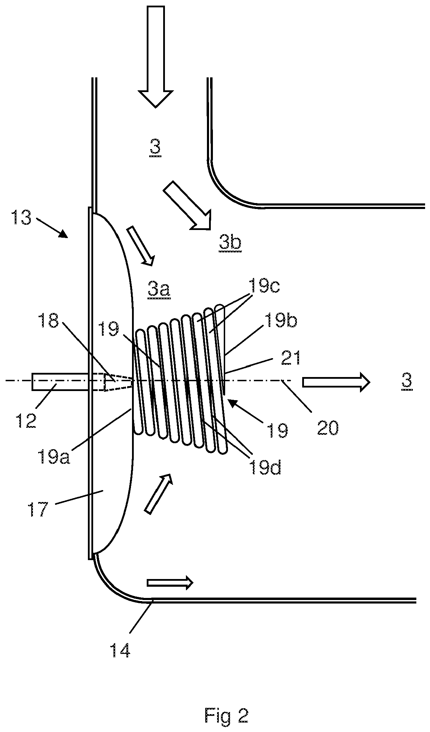

Fig. 2 shows the arrangement 13 in more detail. The arrangement 13 comprises a plate shaped element 17, which may be fitted inside an inlet opening of the container 14. An injection element 18 is attached in a central position on the plate shaped element 17. The injection element 18 is adapted to receive urea solution from the conduit 5 and to inject urea solution as an atomised spray in the exhausts. The injection element 18 is advantageously made of stainless steel, which means it can withstand the hot and corrosive environment, which it is subjected to in contact with the exhausts. The container 14 thus comprises the exhaust conduit 3, leading exhausts out of the combustion engine 1. The arrangement 13 is fitted in a side section of the container 14, through which the exhaust conduit 3 passes after the exhausts having been purified of material particles in the particulate material filter 15. The arrangement 13 comprises a pipe-shaped body 19, which is shaped like a truncated cone. The arrangement 13 is applied in a bent section of the exhaust conduit 3, where the exhaust flow obtains a directional change of approximately 90°.

The pipe-shaped body 19 extends between a first closed end 19a, where the injection element 18 is arranged, and a second open end 19b. The pipe-shaped body 19 has a central longitudinal axis 20, which may also extend through the injection element 18. The pipe-shaped body 19 defines an internal injection space 21, where the injected urea solution is received. The injection space 21 has a successively increasing cross sectional area, from the pipe-shaped body's first end 19a up to its second end 19b. The pipe-shaped body 19 is defined by several elongated material sections 19c, each of which extends one revolution around the central axis 20. In this embodiment, each elongated material section 19c extends around the central shaft 20 with a pitch of a number of degrees. In this case, all elongated material sections 19c are connected with each other, so that they form one cohesive component in the form of a screw spring. Said elongated material sections 19c are located at a distance from adjacent elongated material sections 19c, in such a manner that elongated inlet openings 19d are formed between the elongated material sections 19c. When exhausts reach the bent section, a first portion of the exhausts 3a comes into contact with the pipe-shaped body 19 and is led into the injection space 21 via the elongated inlet openings 19d. A second portion of the exhausts 3b is led further into the exhaust conduit 3 without coming into contact with the pipe-shaped body 19. The exhausts that reach the injection space 21 are led out, via the second open end 19b of the pipe-shaped body, to a joint section of the exhaust conduit 3. The pipe-shaped body 19 may be dimensioned so that it receives approximately 10-20 % of the total exhaust flow in the exhaust conduit 3.

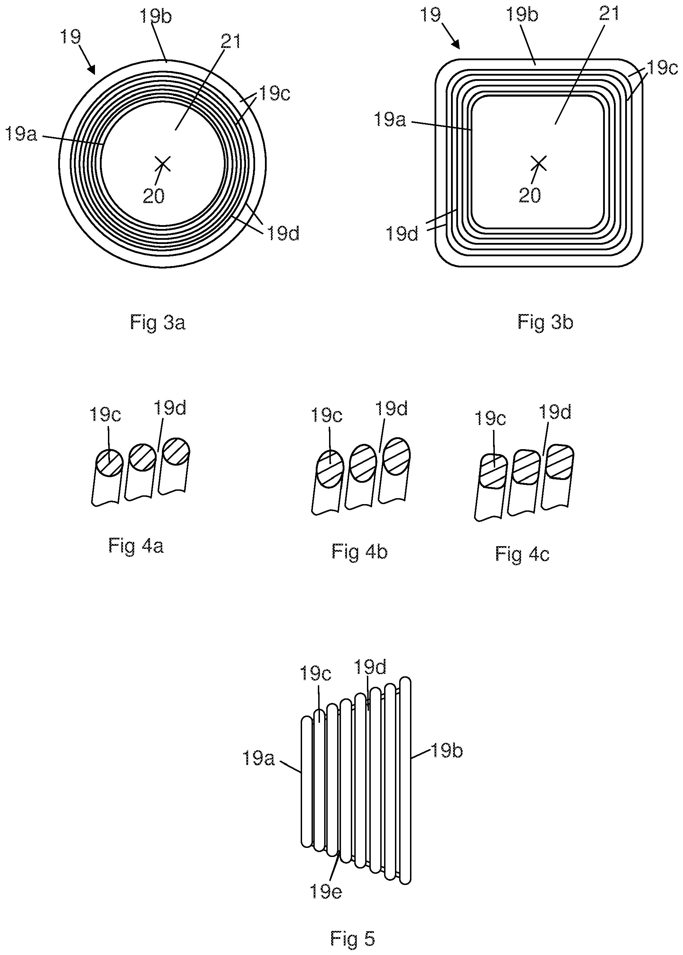

Fig. 3a shows a front view of the pipe-shaped body 19. The pipe-shaped body 19 thus consists of elongated material sections 19c, defining an internal injection space 21 that has a successively increasing cross sectional area, from the pie-shaped body's first end 19a up to the second end 19b. In this case, the injection space 21 has a circular cross sectional area. The elongated material sections 19c thus extend in a circular manner around the central longitudinal axis 22. Fig. 3b shows an alternative embodiment of the pipe-shaped body 19. In this case, the pipe-shaped body 19 defines an injection space 21 with a substantially square cross sectional area with rounded corners.

Fig. 4a shows a cross sectional view through three adjacent elongated material sections 19c of a pipe-shaped body 19. The elongated material sections 19c are arranged at a distance from each other, which defines said inlet openings 19d. Here, it is apparent that each one of the elongated material sections 19c has a circular cross sectional area. Fig. 4b shows a cross sectional view through three adjacent elongated material sections 19c, arranged at a distance from each other, which defines said inlet openings 19d according to one alternative embodiment. The elongated material sections 19c in this case have an oval cross sectional area. Fig. 4c shows a cross sectional view through three adjacent elongated material sections 19c, arranged at a distance from each other, which defines said inlet openings 19d according to another alternative embodiment. The elongated material sections 19c in this case have a rectangular cross sectional area with rounded corners.

Fig. 5 shows an alternative embodiment of the pipe-shaped body 19. The pipe-shaped body 19 in this case consists of elongated material sections 19c in the form of rings. The annular elongated material sections are kept together at a distance from each other with the help of distancing elements 19e. The distance defines the width of the inlet openings 19d. The distancing elements 19e may be created in many different ways. They should, however, be relatively narrow, so that they do not, substantially, impact the exhaust stream through the inlet openings 19d. The annular material sections 19c have a successively increasing diameter from the first end 19a to the second end 19b, so that they define an injection space 21 with a successively increasing cross sectional area in the directional flow of the exhausts. According to the invention, the size of the inlet openings 19d also increases with the distance from the first end 19a.

During the operation of the vehicle 1, the control device 7 receives information regarding, for example, the current exhaust flow and the temperature of the exhausts in the exhaust conduit 3. With the help of this information, the control device 7 calculates the amount of urea solution that needs to be added in order for the level of nitrogen oxides in the exhausts to be reduced optimally. The control device 7 thus activates the pump 8 so that it supplies the desired amount of urea solution to the injection element 18, which injects urea solution into the injection space 21. A first portion 3a of the exhausts in the exhaust conduit 3 is thus led radially into the injection space 21, via the inlet openings 19d of the pipe-shaped body 19. The objective of this radially inward directed exhaust stream is partly to lead non-evaporated urea solution to a more central position inside the injection space, so that it does not get stuck on the pipe-shaped body's 19 internal surface. Another objective is to create a barrier of inflowing exhausts, preventing non-evaporated urea solution, which is stuck on an elongated material section 19c, from being moved via the inlet opening 19d to an elongated material section 19c arranged downstream, with the help of the primary exhaust stream in the pipe-shaped body 19. This efficiently prevents smaller amounts of urea solution, stuck on different elongated material sections 19d, from moving along with the exhausts and accumulating in larger amounts at the second open end 19b of the pipe-shaped body.

The elongated material sections 19c consist of thread-like elements with a well rounded cross sectional shape. They may have a round cross sectional shape, an oval cross sectional shape or a cross sectional shape defined by a polygon with well rounded edges. The elongated material sections 19c have a cross sectional area without sharp edges. Sharp edges are areas where non-evaporated urea solution may accumulate in large amounts, at the same time as there is a risk that such areas may cool down quickly when they come into contact with exhausts with a low temperature. The individual elongated material sections 19c thus do not have a shape facilitating accumulation of non-evaporated urea solution. Any potential non-evaporated urea solution that gets stuck on any of the individual elongated material sections 19c is thus prevented from being transferred to adjacent individual elongated material sections 19c. Urea solution that gets stuck on the individual elongated material sections may thus only accumulate locally, and form a thin film of non-evaporated urea solution on the well rounded surfaces. Such thin accumulations evaporate relatively quickly. The risk of accumulation of large amounts of urea solution for long periods of time is thus substantially eliminated, and accordingly the risk of urea lumps forming is also eliminated.

The invention is not limited to the embodiments displayed on the drawings, but may be varied freely within the scope of the patent claims.

## Claims

1. Arrangement to inject a reducing agent into exhausts, wherein the arrangement (13) comprises a pipe-shaped body (19) arranged in an exhaust passage (3), and an injection element (18), which is adapted to inject reducing agent into an injection area (21) defined by an internal space in the pipe-shaped body (19), wherein exhausts are adapted to be led into the injection space (21), via at least one peripheral inlet opening (19d) in the pipe-shaped body (19), wherein said inlet opening (19d), via which exhausts are led into the injection space (21) extends at least one revolution around a central longitudinal axis (20) in the injection space (21), wherein said inlet opening (19d) is defined by two elongated material sections (19c) arranged in parallel, which extend around the central longitudinal axis (20) at an axial distance from each other, wherein said elongated material sections (19c) are comprised in one cohesive unit in the form of a screw spring, **characterised in that** said inlet opening (19d) has a width that increases successively, from the pipe-shaped body's first end (19a) up to its second end (19b).

2. Arrangement according to claim 1, **characterised in that** said elongated material sections (19c) are annular and that said inlet openings between the annual material sections (19c) are created with the help of distancing elements (19e).

3. Arrangement according to one of the previous claims, **characterised in that** the pipe-shaped body (19) defines an injection space (21) with a continuously increasing cross sectional area, from a first end (19a) where the reducing agent is injected into the injection space (21) to a second end (19b).

4. Arrangement according to any of the previous claims, **characterised in that** the injection space (19) has a circular cross sectional area.

5. Arrangement according to any of the previous claims, **characterised in that** said elongated material sections (19c) have a circular cross sectional shape.

6. Arrangement according to any of the previous claims 1-4, **characterised in that** said elongated material sections (19c) have an oval cross sectional shape.

7. Arrangement according to any of the previous claims 1-4, **characterised in that** said elongated material sections (19c) have a cross sectional shape in the form of a polygon with rounded corners.

8. Arrangement according to any of the previous claims, **characterised in that** the pipe-shaped body (19) is made of stainless steel.

9. Arrangement according to any of the previous claims, **characterised in that** it is adapted as one cohesive unit, which may be fitted in one piece in a container (14) comprising an exhaust conduit (3).

10. Arrangement according to claim 9, **characterised in that** it comprises a plate shaped element (17), supporting the pipe-shaped body (19) and the injection element (18).

11. Vehicle (2) comprising an arrangement according (13) to any of the previous claims 1-10.

12. Exhaust treatment system (11) comprising an arrangement (13) according to any of the previous claims 1-10.

## Patentansprüche

1. Anordnung zum Einspritzen eines Reduktionsmittels in Abgase, wobei die Anordnung (13) einen in einem Abgaskanal (3) angeordneten, rohrförmigen Körper (19) und ein Einspritzelement (18) aufweist, das dazu eingerichtet ist, Reduktionsmittel in einen Einspritzbereich (21) einzuspritzen, der durch einen Innenraum in dem rohrförmigen Körper (19) festgelegt ist, wobei Abgase durch zumindest eine umfangsseitige Einlassöffnung (19d) in dem rohrförmigen Körper (19) in den Einspritzraum (21) geleitet werden können, wobei die Einlassöffnung (19d), durch die Abgase in den Einspritzraum (21) eingeleitet werden, sich mindestens eine Umdrehung um eine Mittellängsachse (20) in dem Einspritzraum (21) herum erstreckt, wobei die Einlassöffnung (19d) durch zwei langgestreckte, parallele Materialabschnitte (19c) festgelegt ist, die mit einem axialen Abstand voneinander um die Mittellängsachse (20) herum verlaufen, wobei die langgestreckten Materialabschnitte (19c) Bestandteil einer zusammenhängenden Einheit in Form einer Schraubenfeder sind, **dadurch gekennzeichnet, dass** die Einlassöffnung (19d) eine Breite hat, die von dem ersten Ende (19a) des rohrförmigen Körpers bis zu seinem zweiten Ende (19b) sukzessive zunimmt.

2. Anordnung nach Anspruch 1,
**dadurch gekennzeichnet, dass** die langgestreckten Materialabschnitte (19c) ringförmig sind und dass die Einlassöffnungen zwischen den ringförmigen Materialabschnitten (19c) mit Hilfe von Abstandhaltern (19e) geschaffen sind.

3. Anordnung nach einem der vorgehenden Ansprüche,
**dadurch gekennzeichnet, dass** der rohrförmige Körper (19) einen Einspritzraum (21) mit einer von einem ersten Ende (19a), an dem das Reduktionsmittel in den Einspritzraum (21) eingespritzt wird, zu einem zweiten Ende (19b) fortwährend zunehmenden Querschnittsfläche definiert.

4. Anordnung nach einem der vorgehenden Ansprüche,
**dadurch gekennzeichnet, dass** der Einspritzraum (21) eine kreisförmige Querschnittsfläche hat.

5. Anordnung nach einem der vorgehenden Ansprüche,
**dadurch gekennzeichnet, dass** die langgestreckten Materialabschnitte (19c) eine kreisförmige Querschnittsgestalt haben.

6. Anordnung nach einem der vorgehenden Ansprüche,
**dadurch gekennzeichnet, dass** die langgestreckten Materialabschnitte (19c) eine ovale Querschnittsform haben.

7. Anordnung nach einem der vorgehenden Ansprüche 1 bis 4,
**dadurch gekennzeichnet, dass** die langgestreckten Materialabschnitte (19c) eine Querschnittsgestalt in der Form eines Polygons mit abgerundeten Ecken haben.

8. Anordnung nach einem der vorgehenden Ansprüche,
**dadurch gekennzeichnet, dass** der rohrförmige Körper (19) aus rostfreiem Stahl besteht.

9. Anordnung nach einem der vorgehenden Ansprüche,
**dadurch gekennzeichnet, dass** sie als eine zusammenhängende Einheit ausgeführt ist, die in einem Stück in einen Behälter (14) eingebaut werden kann, der eine Abgasleitung (3) aufweist.

10. Anordnung nach Anspruch 9,
**dadurch gekennzeichnet, dass** sie ein plattenförmiges Bauteil (17) aufweist, das den rohrförmigen Körper (19) und das Einspritzelement (18) abstützt.

11. Fahrzeug (2) mit einer Anordnung (13) nach einem der vorhergehenden Ansprüche 1 bis 10.

12. Abgasbehandlungssystem (11) mit einer Anordnung (13) nach einem der vorhergehenden Ansprüche 1 bis 10.

## Revendications

1. Agencement permettant d'injecter un agent réducteur dans les échappements, où l'agencement (13) comprend un corps tubulaire (19) disposé dans un passage de gaz d'échappement (3), et un élément d'injection (18), qui est adapté pour injecter l'agent réducteur dans une zone d'injection (21) définie par un espace interne dans le corps tubulaire (19), où les aspirations sont adaptées pour être dirigées dans l'espace d'injection (21), via au moins une ouverture d'entrée périphérique (19d) dans le corps tubulaire (19), où ladite ouverture d'entrée (19d), par laquelle les gaz d'échappements sont conduits dans l'espace d'injection (21) s'étend sur au moins un tour autour d'un axe longitudinal central (20) dans l'espace d'injection (21), où ladite ouverture d'entrée (19d) est définie par deux sections de matériaux allongées (19c) disposées en parallèle, qui s'étendent autour de l'axe longitudinal central (20) à une distance axiale l'une par rapport à l'autre, où lesdites sections de matériaux allongées (19c) sont incluses dans une unité cohésive en forme de ressort à boudin, **caractérisé en ce que** ladite ouverture d'entrée (19d) a une largeur qui augmente successivement, de la première extrémité du corps tubulaire (19a) jusqu'à sa deuxième extrémité (19b).

2. Agencement selon la revendication 1, **caractérisé en ce que** lesdites sections de matériau allongées (19c) sont annulaires et **en ce que** lesdites ouvertures d'entrée entre les sections de matériaux annulaires (19c) sont créées à l'aide d'éléments distants (19e).

3. Agencement selon l'une des revendications précédentes, **caractérisé en ce que** le corps tubulaire (19) définit un espace d'injection (21) avec une section transversale en croissance permanente, à partir d'une première extrémité (19a) où l'agent réducteur est injecté dans l'espace d'injection (21) à une deuxième extrémité (19b).

4. Agencement selon l'une quelconque des revendications précédentes, **caractérisé en ce que** l'espace d'injection (19) a une section transversale circulaire.

5. Agencement selon l'une quelconque des revendications précédentes, **caractérisé en ce que** lesdites sections de matériau allongées (19c) ont une forme en coupe transversale circulaire.

6. Agencement selon l'une quelconque des revendications précédentes 1 à 4, **caractérisé en ce que** lesdites sections de matériau allongées (19c) ont une forme de section transversale ovale.

7. Agencement selon l'une quelconque des revendications précédentes 1 à 4, **caractérisé en ce que** lesdites sections de matériau allongées (19c) ont une forme de section transversale ayant la forme d'un polygone avec coins arrondis.

8. Agencement selon l'une quelconque des revendications précédentes, **caractérisé en ce que** le corps tubulaire (19) est en acier inoxydable.

9. Agencement selon l'une quelconque des revendications précédentes, **caractérisé en ce qu'**il est adapté comme une unité cohésive, qui peut être montée dans une pièce contenue dans un récipient (14) comprenant un conduit d'échappement (3).

10. Agencement selon la revendication 9, **caractérisé en ce qu'**il comprend un élément en forme de plaque (17), soutenant le corps tubulaire (19) et l'élément d'injection (18).

11. Véhicule (2) comprenant un agencement (13) selon l'une quelconque des revendications 1 à 10.

12. Système de traitement de gaz d'échappement (11) comprenant un agencement (13) selon l'une quelconque des revendications précédentes 1 à 10.
